(19) **Europäisches Patentamt / European Patent Office / Office européen des brevets**

(11) **EP 2 451 091 A1**

(12) **EUROPEAN PATENT APPLICATION**
published in accordance with Art. 153(4) EPC

(43) Date of publication:
**09.05.2012 Bulletin 2012/19**

(51) Int Cl.:
***H04B 10/00*** (2006.01)

(21) Application number: **09847980.1**

(22) Date of filing: **24.11.2009**

(86) International application number:
**PCT/CN2009/075115**

(87) International publication number:
**WO 2011/015002 (10.02.2011 Gazette 2011/06)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.08.2009 CN 200910090340**

(71) Applicant: **ZTE Corporation Shenzhen, Guangdong 518057 (CN)**

(72) Inventors:
• **MA, Wenkai**
  **Guangdong 518057 (CN)**
• **YUAN, Yan**
  **Guangdong 518057 (CN)**

(74) Representative: **Manitz, Finsterwald & Partner GbR**
  **Martin-Greif-Strasse 1**
  **80336 München (DE)**

(54) **METHOD AND DEVICE FOR CROSS PROTECTION**

(57) The present invention discloses an device for cross protection, including: a service unit source end, configured to map optical data unit (ODUk) signals into the same time slots of n line similar optical transport network (OTN) frame format (OTUxG) data buses, and obtain m+n line OTUxG data through protective coding and then send to a combination cross unit; the combination cross unit, configured to split and recombine the m+n line OTLTxG data in the time slot, and then send to a service unit destination end; the service unit destination end, configured to protectively decode the m+n line OTUxG data, recover n line OTUxG data, and extract corresponding ODUk signals from the same time slots of n line OTUxG data. The present invention also discloses a method for cross protection. The present invention implements the cross scheduling of ODUk (k=0, 1, 3) levels, improves the processing efficiency, saves the resources, and also makes the use more flexible and convenient.

FIG. 2

**Description**

Technical Field

The present invention relates to the field of communication transport network technology, and in particular, to a method and device for cross protection.

Background of the Related Art

The optical transport hierarchy (OTH) technology is a new generation of standardized digital transport hierarchy structure after the synchronous digital hierarchy (SDH) / synchronous optical network (SONET). The optical transport network (OTN) based on the OTH satisfies the development requirement of the data bandwidth, and is a kind of transparent transport technology formed by the development aiming at the scheduling requirement of high capacity and coarse particles in the backbone network layer. The appearance of the OTN makes the intelligent optical network come true step by step.

The OTN is respectively scheduled based on the optical data unit (ODUk), and the cross scheduling unit processes respectively to complete the connection scheduling function of the ODUk (k=1, 2, 3). In the related art, the cross scheduling function of the ODUk (k=1, 2, 3) levels can be implemented through various schemes.

The Chinese patent application with the application number 200410103304.7 provides a uniform scheduling system and method for synchronizing the optical network and the optical transport network, of which the specific implementation way is: asynchronously mapping the OTN signal to the synchronous transfer mode-17 (STM-17) bus which is provided with the frame synchronous byte and the error code monitoring byte, mapping the SDH signal to the same STM-17 bus, and then connecting the STM-17 bus to the cross connection unit with the uniform frame header indication signal for the uniform scheduling; and mapping the OTN signal into several virtual container 4 (VC4) particles, implementing the cross scheduling of the ODUk (k=1 , 2, 3) levels through the combination cross scheduling of the several VC4 particles. That patent implements the cross scheduling of the ODUk (k=1, 2, 3) levels, however the mapping processing is complex and the minimum particle of the cross scheduling particles is ODU1, which certainly wastes a large number of resources and is inconvenient to use.

Content of the Invention

On that basis, the main objective of the present invention is to provide a method and device for cross protection, to solve the problems, such as the complex mapping processing, waste of resources and inconvenient use, of the current cross scheduling of ODLTk (k=1, 2, 3) levels.

In order to achieve the above objective, the technical scheme of the present invention is implemented as follows:

The present invention provides an device for cross protection, comprising a service unit source end, a service unit destination end and a combination cross unit consisting of m+n cross units, wherein,

the service unit source end is configured to map optical data unit (ODUk) signals into same time slots of n line similar optical transport network (OTN) frame format (OTUxG) data buses, protectively code the n line OTLJxG data, obtain m+n line OTUxG data and send to the combination cross unit;

the combination cross unit is configured to split and recombine the m+n line OTUxG data in the time slot and then send to the service unit destination end; and

the service unit destination end is configured to protectively decode the received m+n line OTUxG data, recover the n line OTUxG data, and extract corresponding ODUk signals from the same time slots of the n line OTUxG data.

The service unit source end comprises:

an ODUk-n line OTUxG mapping sub-unit, configured to map the ODUk signals into the same time slots of the n line OTUxG data buses;

an OTUxG protective coding sub-unit, configured to protectively code the n line OTUxG data and obtain m+n line OTUxG data;

a first overhead inserting sub-unit, configured to insert OTN overhead and time slot overhead to the m+n line OTUxG data before sending the m+n line OTUxG data obtained by protective coding to the combination cross unit.

The combination cross unit comprises:

a first overhead extracting sub-unit, configured to extract the overhead from the received m+n line OTUxG data;

a first frame header aligning sub-unit, configured to align frame headers of the m+n line OTUxG data from which the overhead has been extracted according to a frame header aligning clock;

a splitting and recombining sub-unit, configured to split and recombine the m+n line OTUxG data from which the overhead has been extracted in the time slot;

a second overhead inserting sub-unit, configured to regenerate and insert the overhead to the m+n line OTUxG data after being split and recombined in the time slot and send to the service unit destination end.

The service unit destination end comprises:

a second overhead extracting sub-unit, configured to extract the OTN overhead and the time slot overhead from the received m+n line OTUxG data;

a second frame header aligning sub-unit, configured to align the frame headers of the m+n line OTUxG data from which the overhead has been extracted according to a frame header aligning clock;

an OTUxG protective decoding sub-unit, configured to protectively decode the m+n line OTUxG data after aligning the frame headers and recover n line OTUxG data;

an n line OTUxG-ODUk mapping sub-unit, configured to extract corresponding ODUk signals from the same time slots of the n line OTUxG data.

The device further comprises a clock unit, configured to uniformly provide a uniform system clock and the frame header aligning clock for the service unit source end, the service unit destination end and the combination cross unit.
The present invention further provides a method for cross protection, comprising:

a service unit source end mapping optical data unit (ODUk) signals into same time slots of n line similar optical transport network (OTN) frame format (OTUxG) data buses, protectively coding the n line OTUxG data, obtaining m+n line OTUxG data and sending to a combination cross unit consisting of m+n cross units;

the combination cross unit splitting and recombining the m+n line OTUxG data in the time slot and then sending to a service unit destination end;

the service unit destination end protectively decoding the received m+n line OTUxG data, recovering the n line OTUxG data, and extracting corresponding ODUk signals from the same time slots of the n line OTUxG data.

Before the service unit source end sends the m+n line OTUxG data obtained by protective coding to the combination cross unit, the method further comprises: the service unit source end inserting OTN overhead and time slot overhead to the m+n line OTUxG data;
correspondingly, before the combination cross unit splits and recombines the m+n line OTUxG data in the time slot, the method further comprises: the combination cross unit extracting the overhead from the m+n line OTUxG data; and aligning frame headers of the OTUxG data using a frame header aligning clock generated by a clock unit after the overhead is extracted.
After the combination cross unit splits and recombines the m+n line OTUxG data in the time slot, the method further comprises: the combination cross unit regenerating and inserting the overhead to the OTUxG data and sending to the service unit destination end;
correspondingly, after the service unit destination end receives the m+n line OTUxG data, the method further comprises: the service unit destination end extracting the OTN overhead and the time slot overhead from the m+n line OTUxG data.
After the service unit destination end extracts the OTN overhead and before extracts the time slot overhead, the method further comprises: the service unit destination end aligning frame headers of the OTUxG data using the frame header aligning clock generated by the clock unit.
The service unit source end, the service unit destination end and the combination cross unit work under an uniform system clock provided by the clock unit.
The method and device for cross protection provided by the present invention performs the centralized cross protection of ODUk (k=0, 1, 2, 3) levels by using OTUxG. For m+n OTUxG buses, when any, no bigger than m, OTUxG buses fails, the service unit can recover the normal ODUk (k=0, 1, 2, 3) signals by using the data of the remanent n OTUxG buses. The present invention improves the data processing efficiency, saves the resources, and also makes the use more flexible and convenient.

Brief Description of Drawings

FIG. 1 is a structure diagram of an OTUxG frame of the present invention;

FIG. 2 is a structure diagram of an device for cross protection of the present invention;

FIG. 3 is a structure diagram of an device for cross protection according to an embodiment of the present invention;

FIG. 4 is a flow chart of a method for cross protection of the present invention;

FIG. 5 is a distribution diagram of an ODUk (k=1, 1, 2, 3) in n line OTUxG data of the present invention;

FIG. 6 is a diagram of a cross protection process according to an embodiment of the present invention;

FIG. 7 is a naming and distribution diagram of data generated by protective coding according to an embodiment of the present invention.

Preferred Embodiments of the Present Invention

The technical scheme of the present invention is further described in detail with reference to the accompanying drawings and in combination with embodiments hereinafter.

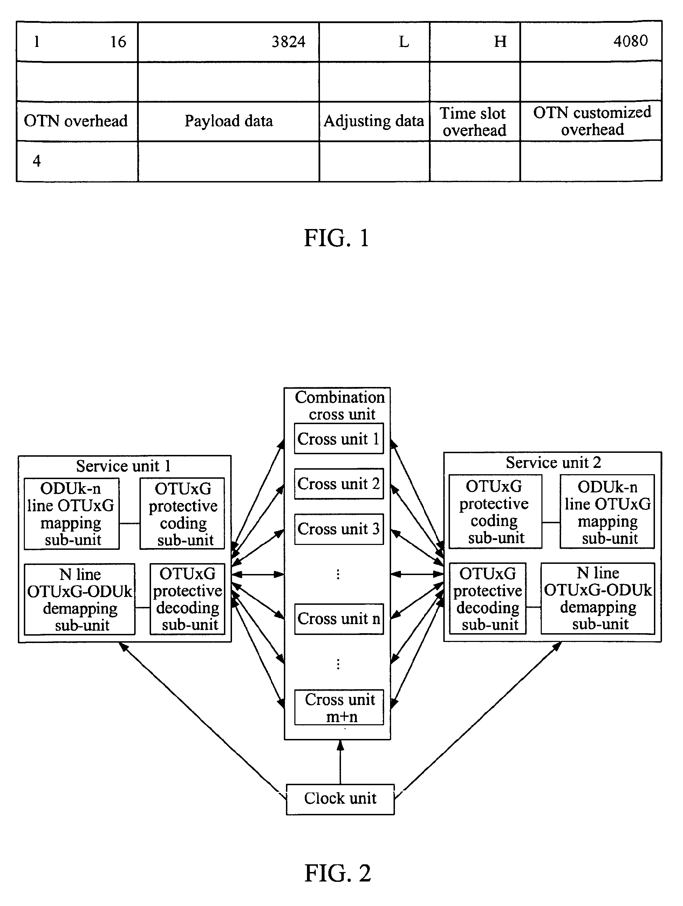

In order to solve the problems, such as waste of recourses and inconvenient protection, of the current cross way of ODUk (k=1, 2, 3) levels, the present invention provides to perform the centralization cross scheduling of ODUk (k=1, 2, 3) levels by frame format similar to OTN (OTUxG). The frame structure of the OTUxG is shown in FIG. 1, in which the former 16 columns are overhead of the OTN, wherein, the ODU layer overhead in the former 14 columns of the second to the fourth rows will not be used, while can be acted as OTN customized overhead, and others generally keep the current use; the $17^{th}$ to $3824^{th}$ columns are payload data, bearing the ODUk (k=0, 1, 2, 3) particles for cross, and that part is divided as the time slot number is T (T=2, 4, 6, 8) and each time slot of a single bus is required to be able to bear an ODU0 of which the speed rate is 1/2 of that of the ODU1, that is, 2488320/2=1244160kbit/s; the forward error correction (FEC) is defined again: the $3825^{th}$ to $L^{th}$ columns are adjusting data, for adjusting the length of the byte participating in protective coding and decoding, to satisfy the requirement of the algorithm for protective coding and decoding; the $(L+1)^{th}$ to $H^{th}$ columns are customized time slot overhead, for reflecting cooperatively the status of each time slot of the payload data part; the $(H+1)^{th}$ to $4080^{th}$ columns are OTN customized overhead, for reflecting cooperatively the status of each time slot; the $(H+1)^{th}$ to $4080^{th}$ columns are not required temporally and also can act as the OTN customized overhead, for reflecting some customized frame status information. The L, H and T are required to satisfy the following relation:

$$L - 16 = 3 \cdot T \cdot N, \quad H - L = T \cdot A,$$

wherein, $L \leq 4080$, and N is any integer; $H \leq 4080$, and A is any positive integer; "." represents multiplying.

An device for cross protection provided by the present invention, as shown in FIG. 2, consists of several service units, a combination cross unit consisting of m+n cross units and a clock unit. The several service units are shown as the service unit 1 and the service unit 2 in FIG. 2. Wherein, each service unit has m+n below backplane buses which connect to m+n cross units respectively; the ODUk (k=0, 1, 2, 3) signal of each below backplane is borne by several time slots of the m+n OTUxG data buses. Each service unit not only can act as a service unit source end, but also can act as a service unit destination end.

The service unit, when acting as the service unit source end, is configured to map ODUk signals into same time slots of n line OTUxG data buses, wherein, that operation is implemented by ODUK-n line OTUxG mapping sub-unit; and protectively code the n line OTUxG data, wherein, that operation is implemented by the OTUxG protective coding sub-unit, obtain m+n line OTUxG data and send to the combination cross unit.

The combination cross unit is configured to split and recombine the m+n line OTUxG data in the time slot and then send to the service unit destination end.

The service unit, when acting as the service unit destination end, is configured to protectively decode the received m+n line OTUxG data, wherein, that operation is implemented by the OTUxG protective decoding sub-unit, recover the n line OTUxG data; and extract corresponding ODUk signals from the same time slots of the n line OTUxG data, wherein, that operation is implemented by the n line OTLJxG-ODUk mapping sub-unit.

The clock unit is configured to provide a uniform system clock and the frame header aligning clock for the service unit source end, the service unit destination end and the combination cross unit.

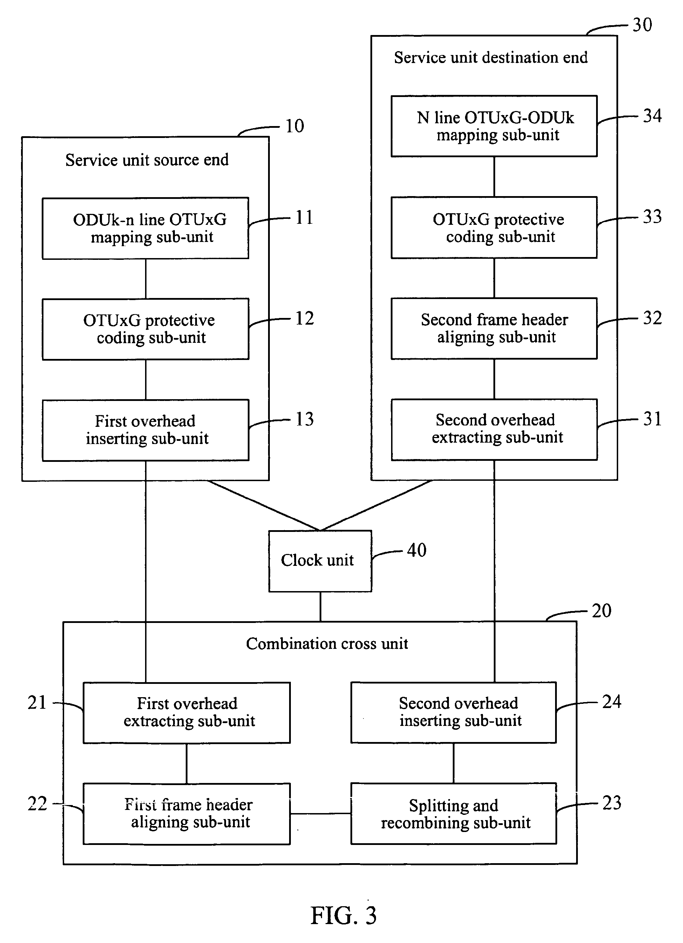

A preferable device for cross protection according to an embodiment of the present invention, as shown in FIG. 3, consists of a service unit source end 10, a combination cross unit 20, a service unit destination end 30 and a clock unit 40.

Wherein, the service unit source end 10 specifically includes: an ODUk-n line OTUxG mapping sub-unit 11, an OTUxG protective coding sub-unit 12 and a first overhead inserting sub-unit 13. The ODUk-n line OTUxG mapping sub-unit 11 is configured to map the ODUk signals into the same time slots of n line OTUxG data buses. The OTUxG protective coding sub-unit 12 is configured to protectively code the n line OTUxG data and obtain m+n line OTUxG data. The first overhead inserting sub-unit 13 is configured to insert OTN overhead and time slot overhead to the m+n line OTUxG data obtained by protective coding, and then send m+n line OTUxG data into which the overhead has been inserted to the combination cross unit 20.

The combination cross unit 20 specifically includes: a first overhead extracting sub-unit 21, a first frame header aligning sub-unit 22, a splitting and recombining sub-unit 23 and a second overhead inserting sub-unit 24. The first overhead extracting sub-unit 21 is configured to extract the overhead from the received m+n line OTUxG data. The first frame header aligning sub-unit 22 is configured to align the frame headers of the m+n line OTUxG data after extracting the overhead according to the frame header aligning clock. The splitting and recombining sub-unit 23 is configured to split and recombine the m+n line OTUxG data after aligning the frame headers in the time slot. The second overhead inserting sub-unit 24 is configured to regenerate and insert the overhead to the m+n line OTUxG data after splitting and recombining in the time slot and send to the service unit destination end 30.

The service unit destination end 30 specifically includes: a second overhead extracting sub-unit 31, a second frame header aligning sub-unit 32, an OTUxG protective decoding sub-unit 33 and an n line OTUxG-ODUk mapping sub-unit 34. The second overhead extracting sub-unit 31 is configured to extract the OTN overhead and the time slot overhead from the received m+n line OTUxG data. The second frame header aligning sub-unit 32 is configured to align the frame headers of the m+n line OTUxG data from which the overhead has been extracted according to the frame header aligning clock. The OTUxG protective decoding sub-unit 33 is configured to protectively decode the m+n line OTUxG data after the frame headers of which have been aligned and recover n line OTUxG data. The n line OTUxG-ODUk mapping sub-unit 34 is configured to extract the corresponding ODUk signals from the same time slots of the recovered n line OTUxG data.

The clock unit 40 is configured to provide a uniform system clock and the frame header aligning clock for the service unit source end 10, the service unit destination end 30 and the combination cross unit 20.

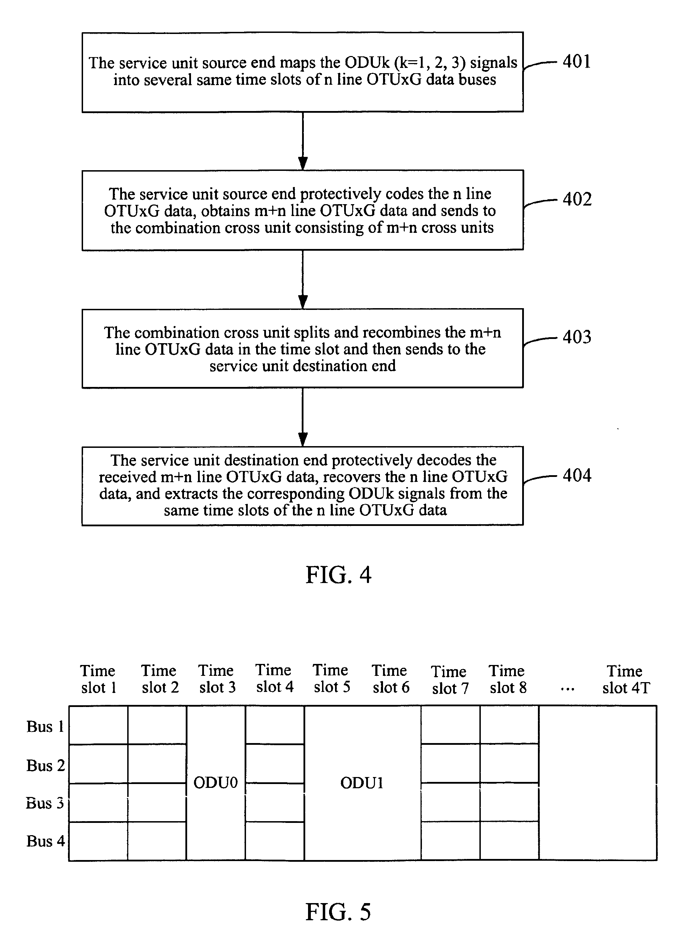

A method for cross protection implemented by the above device for cross protection, as shown in FIG. 4, mainly includes the following steps.

Step 401, the service unit source end maps the ODUk (k=1, 2, 3) signals to be sent to the cross unit into several the same time slots of n line OTUxG data buses.

The service unit source end encapsulates each line of received client signal into the ODUK (k=1, 2, 3) signal. The client signal can be a gigabit Ethernet (GE) signal, a fibre channel (FC) signal, an SDH signal, etc. and when the client signal is GE or FC, it requires to be mapped to a generic framing procedure transparent (GFP-T) code stream, and then is encapsulated into the ODUK (k=1, 2, 3) signal.

The OTUxG signal of the below backplane is authigenic in the service unit and works under the system clock, and the frame headers are aligned. When n=4, that is, there are 4 OTUxG buses, one OTUxG bus can act as a row in the OTUxG frame structure; as shown in FIG. 5, when the time slot number of a single OTUxG bus is T, the total number of combination time slots is 4T, wherein, ODUO requires to occupy 1 combination time slot, ODU1 requires to occupy 2 combination time slots, and ODU2 requires to occupy 8 combination time slots.

Step 402, the service unit source end protectively codes the n line OTUxG data, obtains m+n line OTUxG data and sends to the combination cross unit consisting of m+n cross units.

Step 403, the combination cross unit splits and recombines the m+n line OTUxG data in the time slot and then sends to the service unit destination end.

Step 404, the service unit destination end protectively decodes the received m+n line OTUxG data, recovers the n line OTUxG data, and extracts the corresponding ODUk signal from the same time slots of the n line OTUxG data.

It should be pointed out that considering the requirement of flexible protection the adjusting data are added when establishing the OTUxG. When protectively coding and decoding the m:n, not only the payload data participate in, but also the adjusting data participate in. The specific length of the adjusting data is related to the used protective coding and decoding algorithm, and its length can be 0. For example, when implementing the 1+1 backup protection or implementing the 1:n protection through XOR of each bus data, the adjusting data are not required; while implementing m:n (m>1, and m<n) protection by using the redundant array of independent disk (RAID 6) algorithm, it is required that the data to participate in coding and decoding and the time slot number T of the data have a certain relationship, and now the adjusting data are absolutely necessary.

The OTN customized overhead do not participate in the time slot cross and the protective coding and decoding; the adjusting data part participates in the time slot cross and the protective coding and decoding, therefore, the time slot overhead without the requirement of processing sequence can be placed in the adjusting data part; the time slot overhead participates in the time slot cross, while not participates in the protective coding and decoding. The time slot overhead and the payload data cross together, however, the overhead required to be processed before the protective coding should be placed in the time slot overhead.

Furthermore, the method of adding the proper adjusting data to assist completing the protective coding and decoding in the present invention may be also applied to the transforming of other frame structures to implement m:n protection, wherein, the values of m and n are integers larger than 1, and m<n.

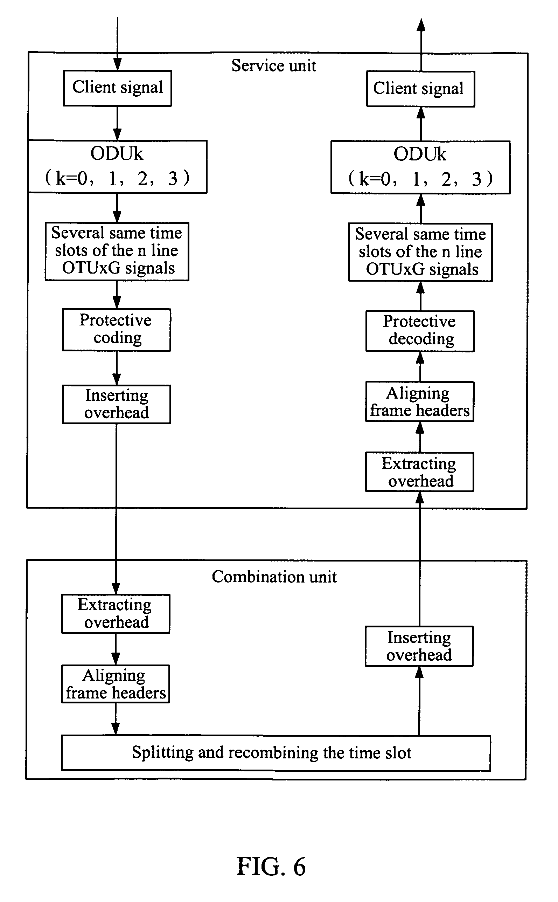

The above method for cross protection is further described in detail taking the SDH signal as an example hereafter. The specific process of the cross protection is shown as FIG. 6, including the following steps.

Step 1, the service unit source end encapsulates the received SDH signal into ODUk (k=0, 1, 2, 3) signal.

Step 2, the service unit source end splits each ODUk (k=0, 1, 2, 3) signal generated in step 1, and distributes to several same time slots of n line OTUxG signals.

Step 3, the service unit source end protectively codes the n line OTUxG data in step 2, and obtains m+n line OTUxG data.

It should be pointed out that both the payload data and the adjusting data are required to participate in the protective coding and decoding.

Step 4, the service unit source end inserts the OTN overhead and the time slot overhead to the m+n line OTUxG data generated in step 3, and then sends to the combination cross unit.

Wherein, the OTN overhead includes but not limited to a ready indication signal of the service unit, a ready indication signal of the cross unit, an alarm for signal loss / signal deterioration of the client signal, an alarm for signal loss / signal deterioration of the client signal sub layer, and a protective switching byte of the ODUk. The time slot overhead includes but not limited to the marking signal of each time slot.

Step 5, the combination cross unit extracts the overhead from the OTUxG data from the service unit source end.

Step 6, the combination cross unit aligns the frame headers of the OTUxG data after extracting the overhead using the uniform frame header aligning clock.

Step 7, the combination cross unit splits and recombines the OTUxG data after the frame headers of which have been aligned in the time slot, and implements the redistribution of the ODUk particles to each service unit destination end.

It should be pointed out that the time slot overhead are required to be split and recombined in the time slot together with the payload data and the adjusting data.

Step 8, the combination cross unit regenerates and then inserts or transparently transmits the OTN overhead for the OTUxG data having been split and recombined in the time slot, and then sends to the service unit destination end.

Step 9, the service unit destination end extracts the OTN overhead and the OTN customized overhead from the m+n line OTUxG signals from the combination cross unit.

Step 10, the service unit destination end aligns the frame headers of the m+n line OTUxG data from step 9 using the uniform frame header aligning clock.

Step 11, the service unit destination end extracts the overhead from the m+n line OTUxG data after aligning the frame headers in the time slot.

Step 12, according to the overhead processing results in step 9 and step 11, the service unit destination end determines the corresponding protective decoding policy, decodes the m+n line OTUxG data from which the overhead has been extracted, and recovers the n line OTUxG data.

It should be pointed out that the adjusting data is required to participate in the decoding together with the payload data.

Step 13, the service unit destination end extracts the corresponding ODUk (k=0, 1, 2, 3) signals from the several same time slots of the recovered n line OTUxG data.

It should be pointed out that now the adjusting data are not taken as part of the extracted data.

Step 14, the service unit destination end decapsulates the extracted ODUk (k=0, 1, 2, 3) signals, obtains the SDH signals and sends out.

The using of the adjusting data is further described in detail taking the 2:n (n=2, 3, 4, 5) protection as an example hereafter.

Using the RAID 6 algorithm, the principle of 2:n (n=2, 3, 4, 5) protection algorithm is as follows: the total number of data Dij ($0 \leq i \leq 4$, $i \leq j \leq 5$) and Ps ($0 \leq s \leq 5$) is 21, wherein, 15 Dij are data, 6 Ps are the check codes of Dij, and the following equations exist:

$$P0=D01^\wedge D02^\wedge D03^\wedge D04^\wedge D05;$$

$$P1=D01^\wedge D12^\wedge D13^\wedge D14^\wedge D15;$$

$$P2=D02^\wedge D12^\wedge D23^\wedge D24^\wedge D25;$$

$$P3=D03^\wedge D13^\wedge D23^\wedge D34^\wedge D35;$$

$$P4=D04^\wedge D14^\wedge D24^\wedge D34^\wedge D45;$$

$$P5=D05^\wedge D15^\wedge D25^\wedge D35^\wedge D45.$$

Wherein, "$\wedge$" represents a logic XOR, the 21 data are divided into 7 groups of data, each group having 3 data, as shown in the following table:

Table 1

| P0 | P1 | P2 | P3 | P4 | P5 | D03 |
|-----|-----|-----|-----|-----|-----|-----|
| D12 | D23 | D34 | D45 | D05 | D01 | D14 |
| D35 | D04 | D15 | D02 | D13 | D24 | D25 |

In the above table, each column corresponds to a group of data respectively, and if any two columns of data in the 7 columns of data are lost, the lost two columns of data can be recovered through the remanent 5 columns of data. Since it is the 2:n (n=2, 3, 4, 5) protection and the value of n may be smaller than 5, now a virtual bus can be made and all the values of the virtual bus are made 0, in this way, 2:3 protection and 2:4 protection can be integrated to 2:5 protection.

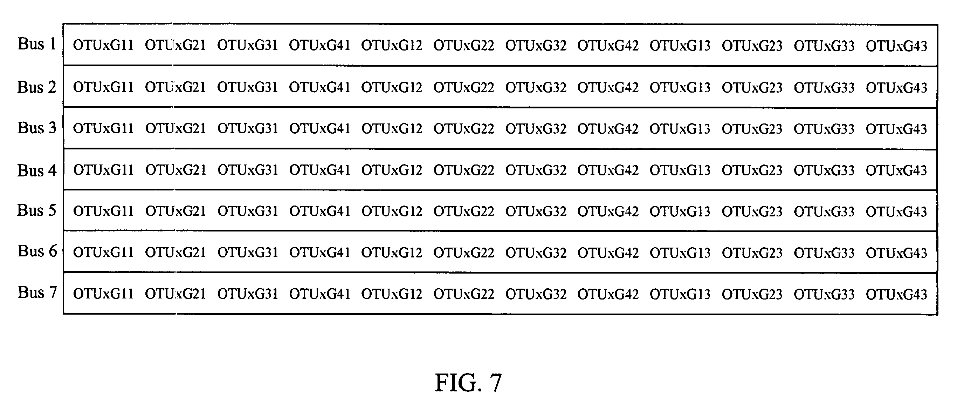

For specific use, it can be operated as follows: each time slot particle on each OTUxG bus is named as OTUxGij, wherein, $1 \leq i \leq T$, representing the time slot i; $1 \leq j \leq 3$, representing the time slot occurs for j times. The 3 continuous data whose i values are the same and j values vary from 1 to 3 are as 1 group, then n (n=2, 3, 4, 5) buses precisely have 3n data OTUxGij. The 3n particles are used as a group of Dij, and 6 redundant Ps ($0 \leq s \leq 5$) are added as 6 new Dij, and the 3n+6 ODUij particles are distributed into n+2 high speed buses according to a rule, and thus the n service buses are extended to n+2 service buses, thus implementing 2:n protection. For example, when n=5 and T=4, 3n=15 and 3n+6=21, and the corresponding bus data distribution is as shown in FIG. 7.

It can be known from the above process that a certain relationship, L=3·T·Z, is required to exist between the length L of the data and the time slot number T participating in the coding and decoding in each row of the frame data, when using the above coding and decoding algorithm, wherein, Z is any positive integer, and "·" represents multiplying.

However the length of the OTUxG payload data part does not satisfy that relationship with the time slot number, therefore, now a part of redundant data is required to be added to participate in the protective coding and decoding, which is the function of the adjusting data. At the same time, since each time slot datum goes through the protective coding when the scheduling is performed in the cross board, the adjusting data are required to participate in the cross scheduling together with the data in the cross board.

In summary, the present invention performs the centralized cross protection of ODUk (k=0, 1, 2, 3) levels by using OTUxG. For m+n OTUxG buses, when any, no bigger than m, OTUxG buses fails, the service unit can recover the normal ODUk (k=0, 1, 2, 3) signal by using the remanent n OTUxG bus data. The present invention improves the data processing efficiency, saves the resources, and also makes the use more flexible and convenient.

The above description is only the preferable embodiments of the present invention and is not intended to limit protection scope of the present invention.

**Claims**

1. An device for cross protection, comprising a service unit source end, a service unit destination end and a combination cross unit consisting of m+n cross units, wherein,
   the service unit source end is configured to map optical data unit (ODUk) signals into same time slots of n line similar optical transport network (OTN) frame format (OTUxG) data buses, protectively code the n line OTUxG data, obtain m+n line OTUxG data and send to the combination cross unit;
   the combination cross unit is configured to split and recombine the m+n line OTUxG data in the time slot and then send to the service unit destination end; and
   the service unit destination end is configured to protectively decode the received m+n line OTUxG data, recover the n line OTUxG data, and extract corresponding ODUk signals from the same time slots of the n line OTUxG data.

2. The device according to claim 1, wherein, the service unit source end comprises:

   an ODUk-n line OTUxG mapping sub-unit, configured to map the ODUk signals into the same time slots of the n line OTUxG data buses;
   an OTUxG protective coding sub-unit, configured to protectively code the n line OTUxG data and obtain m+n line OTUxG data;
   a first overhead inserting sub-unit, configured to insert OTN overhead and time slot overhead to the m+n line OTUxG data before sending the m+n line OTUxG data obtained by protective coding to the combination cross unit.

3. The device according to claim 1, wherein, the combination cross unit comprises:

   a first overhead extracting sub-unit, configured to extract the overhead from the received m+n line OTUxG data;
   a first frame header aligning sub-unit, configured to align frame headers of the m+n line OTUxG data from which the overhead has been extracted according to a frame header aligning clock;
   a splitting and recombining sub-unit, configured to split and recombine the m+n line OTUxG data from which the overhead has been extracted in the time slot;
   a second overhead inserting sub-unit, configured to regenerate and insert the overhead to the m+n line OTUxG data after being split and recombined in the time slot and send to the service unit destination end.

4. The device according to claim 1, wherein, the service unit destination end comprises:

   a second overhead extracting sub-unit, configured to extract the OTN overhead and the time slot overhead from the received m+n line OTUxG data;
   a second frame header aligning sub-unit, configured to align the frame headers of the m+n line OTUxG data from which the overhead has been extracted according to a frame header aligning clock;
   an OTUxG protective decoding sub-unit, configured to protectively decode the m+n line OTUxG data after aligning the frame headers and recover n line OTUxG data;
   an n line OTUxG-ODUk mapping sub-unit, configured to extract corresponding ODUk signals from the same time slots of the n line OTUxG data.

5. The device according to claim 1, 2, 3 or 4, wherein, further comprising a clock unit, configured to uniformly provide a uniform system clock and the frame header aligning clock for the service unit source end, the service unit destination end and the combination cross unit.

6. A method for cross protection, comprising:

   a service unit source end mapping optical data unit (ODUk) signals into same time slots of n line similar optical transport network (OTN) frame format (OTUxG) data buses, protectively coding the n line OTUxG data, obtaining m+n line OTUxG data and sending to a combination cross unit consisting of m+n cross units;

the combination cross unit splitting and recombining the m+n line OTUxG data in the time slot and then sending to a service unit destination end;

the service unit destination end protectively decoding the received m+n line OTUxG data, recovering the n line OTUxG data, and extracting corresponding ODUk signals from the same time slots of the n line OTUxG data.

7. The method according to claim 6, wherein, before the service unit source end sends the m+n line OTUxG data obtained by protective coding to the combination cross unit, the method further comprises: the service unit source end inserting OTN overhead and time slot overhead to the m+n line OTUxG data;

correspondingly, before the combination cross unit splits and recombines the m+n line OTUxG data in the time slot, the method further comprises: the combination cross unit extracting the overhead from the m+n line OTUxG data; and aligning frame headers of the OTUxG data using a frame header aligning clock generated by a clock unit after the overhead is extracted.

8. The method according to claim 7, wherein, after the combination cross unit splits and recombines the m+n line OTUxG data in the time slot, the method further comprises: the combination cross unit regenerating and inserting the overhead to the OTUxG data and sending to the service unit destination end;

correspondingly, after the service unit destination end receives the m+n line OTUxG data, the method further comprises: the service unit destination end extracting the OTN overhead and the time slot overhead from the m+n line OTUxG data.

9. The method according to claim 8, wherein, after the service unit destination end extracts the OTN overhead and before extracts the time slot overhead, the method further comprises: the service unit destination end aligning frame headers of the OTUxG data using the frame header aligning clock generated by the clock unit.

10. The method according to any one of claims 6 to 9, wherein, the service unit source end, the service unit destination end and the combination cross unit work under an uniform system clock provided by the clock unit.

| 1 16 | 3824 | L | H | 4080 |
|---|---|---|---|---|
| | | | | |
| OTN overhead | Payload data | Adjusting data | Time slot overhead | OTN customized overhead |
| 4 | | | | |

## FIG. 1

```
                    ┌──────────────────┐
                    │   Combination    │
                    │    cross unit    │
                    │ ┌──────────────┐ │
                    │ │ Cross unit 1 │ │
                    │ └──────────────┘ │
┌─────────────────┐ │ ┌──────────────┐ │ ┌─────────────────┐
│  Service unit 1 │ │ │ Cross unit 2 │ │ │  Service unit 2 │
```

| Service unit 1 | | Combination cross unit | Service unit 2 | |
|---|---|---|---|---|
| ODUk-n line OTUxG mapping sub-unit | OTUxG protective coding sub-unit | Cross unit 1 / Cross unit 2 / Cross unit 3 / ⋮ / Cross unit n / ⋮ / Cross unit m+n | OTUxG protective coding sub-unit | ODUk-n line OTUxG mapping sub-unit |
| N line OTUxG-ODUk demapping sub-unit | OTUxG protective decoding sub-unit | | OTUxG protective decoding sub-unit | N line OTUxG-ODUk demapping sub-unit |

Clock unit

## FIG. 2

FIG. 3

The service unit source end maps the ODUk (k=1, 2, 3) signals into several same time slots of n line OTUxG data buses — 401

The service unit source end protectively codes the n line OTUxG data, obtains m+n line OTUxG data and sends to the combination cross unit consisting of m+n cross units — 402

The combination cross unit splits and recombines the m+n line OTUxG data in the time slot and then sends to the service unit destination end — 403

The service unit destination end protectively decodes the received m+n line OTUxG data, recovers the n line OTUxG data, and extracts the corresponding ODUk signals from the same time slots of the n line OTUxG data — 404

## FIG. 4

| | Time slot 1 | Time slot 2 | Time slot 3 | Time slot 4 | Time slot 5 | Time slot 6 | Time slot 7 | Time slot 8 | ... | Time slot 4T |
|---|---|---|---|---|---|---|---|---|---|---|
| Bus 1 | | | | | | | | | | |
| Bus 2 | | | ODU0 | | ODU1 | | | | | |
| Bus 3 | | | | | | | | | | |
| Bus 4 | | | | | | | | | | |

## FIG. 5

```
                                    Service unit
          ┌─────────────┐                      ┌─────────────┐
          │Client signal│                      │Client signal│
          └─────────────┘                      └─────────────┘
                 │                                     ▲
                 ▼                                     │
          ┌─────────────┐                      ┌─────────────┐
          │    ODUk     │                      │    ODUk     │
          │(k=0, 1, 2, 3)│                     │(k=0, 1, 2, 3)│
          └─────────────┘                      └─────────────┘
                 │                                     ▲
                 ▼                                     │
        ┌────────────────┐                   ┌────────────────┐
        │Several same time│                  │Several same time│
        │slots of the n line│                │slots of the n line│
        │  OTUxG signals  │                  │  OTUxG signals  │
        └────────────────┘                   └────────────────┘
                 │                                     ▲
                 ▼                                     │
        ┌────────────────┐                   ┌────────────────┐
        │   Protective   │                   │   Protective   │
        │     coding     │                   │    decoding    │
        └────────────────┘                   └────────────────┘
                 │                                     ▲
                 ▼                                     │
        ┌────────────────┐                   ┌────────────────┐
        │   Inserting    │                   │    Aligning    │
        │    overhead    │                   │  frame headers │
        └────────────────┘                   └────────────────┘
                 │                                     ▲
                 │                                     │
                 │                           ┌────────────────┐
                 │                           │   Extracting   │
                 │                           │    overhead    │
                 │                           └────────────────┘
                 │                                     ▲
                                 Combination unit
                 │                                     │
                 ▼
        ┌────────────────┐
        │   Extracting   │
        │    overhead    │                   ┌────────────────┐
        └────────────────┘                   │   Inserting    │
                 │                           │    overhead    │
                 ▼                           └────────────────┘
        ┌────────────────┐                           ▲
        │    Aligning    │                           │
        │  frame headers │                           │
        └────────────────┘                           │
                 │                                    │
                 ▼                                    │
     ┌──────────────────────────────────────────────────────┐
     │      Splitting and recombining the time slot          │
     └──────────────────────────────────────────────────────┘
```

FIG. 6

| Bus 1 | OTUxG11 | OTUxG21 | OTUxG31 | OTUxG41 | OTUxG12 | OTUxG22 | OTUxG32 | OTUxG42 | OTUxG13 | OTUxG23 | OTUxG33 | OTUxG43 |
|---|---|---|---|---|---|---|---|---|---|---|---|---|
| Bus 2 | OTUxG11 | OTUxG21 | OTUxG31 | OTUxG41 | OTUxG12 | OTUxG22 | OTUxG32 | OTUxG42 | OTUxG13 | OTUxG23 | OTUxG33 | OTUxG43 |
| Bus 3 | OTUxG11 | OTUxG21 | OTUxG31 | OTUxG41 | OTUxG12 | OTUxG22 | OTUxG32 | OTUxG42 | OTUxG13 | OTUxG23 | OTUxG33 | OTUxG43 |
| Bus 4 | OTUxG11 | OTUxG21 | OTUxG31 | OTUxG41 | OTUxG12 | OTUxG22 | OTUxG32 | OTUxG42 | OTUxG13 | OTUxG23 | OTUxG33 | OTUxG43 |
| Bus 5 | OTUxG11 | OTUxG21 | OTUxG31 | OTUxG41 | OTUxG12 | OTUxG22 | OTUxG32 | OTUxG42 | OTUxG13 | OTUxG23 | OTUxG33 | OTUxG43 |
| Bus 6 | OTUxG11 | OTUxG21 | OTUxG31 | OTUxG41 | OTUxG12 | OTUxG22 | OTUxG32 | OTUxG42 | OTUxG13 | OTUxG23 | OTUxG33 | OTUxG43 |
| Bus 7 | OTUxG11 | OTUxG21 | OTUxG31 | OTUxG41 | OTUxG12 | OTUxG22 | OTUxG32 | OTUxG42 | OTUxG13 | OTUxG23 | OTUxG33 | OTUxG43 |

FIG. 7

EP 2 451 091 A1

# INTERNATIONAL SEARCH REPORT

| International application No. |
| --- |
| PCT/CN2009/075115 |

**A. CLASSIFICATION OF SUBJECT MATTER**

H04B10/00 (2006.01)i

According to International Patent Classification (IPC) or to both national classification and IPC

**B. FIELDS SEARCHED**

Minimum documentation searched (classification system followed by classification symbols)

IPC:H04B10/-,H04J14/-,H04Q11/-

Documentation searched other than minimum documentation to the extent that such documents are included in the fields searched

Electronic data base consulted during the international search (name of data base and, where practicable, search terms used)

CPRSABS,CNKI,WPI,EPODOC:OPTICAL,MAP,SLOT,CROSS,OTU,OTN,OVERHEAD

**C. DOCUMENTS CONSIDERED TO BE RELEVANT**

| Category* | Citation of document, with indication, where appropriate, of the relevant passages | Relevant to claim No. |
| --- | --- | --- |
| X | CN1832629A(HUAWEI TECH CO LTD) 13 Sep.2006 (13.09.2006) the description page 16 lines 8-10, page 18 lines 8-11, page 23 lines 2-10, page 24 line 26，page 26 line 20 | 1,2,4-7,9,10 |
| A | CN101389146A(HUAWEI TECH CO LTD)18 Mar.2009(18.03.2009) the whole document | 1-10 |
| A | CN1842221A(HUAWEI TECH CO LTD)04 Oct.2006(04.10.2006) the whole document | 1-10 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 04 May 2010 (04.05.2010) | **13 May 2010 (13.05.2010)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **JIANG Jingjing** Telephone No. (86-10)62411430 |

Form PCT/ISA /210 (second sheet) (July 2009)

## INTERNATIONAL SEARCH REPORT
### Information on patent family members

| International application No. |
| --- |
| PCT/CN2009/075115 |

| Patent Documents referred in the Report | Publication Date | Patent Family | Publication Date |
| --- | --- | --- | --- |
| CN1832629A | 13.09.2006 | None | |
| CN101389146A | 18.03.2009 | EP2037604A1 | 18.03.2009 |
| | | US2009074410A1 | 19.03.2009 |
| | | AT447804T | 15.11.2009 |
| | | EP2037604B1 | 04.11.2009 |
| | | DE602008000260E | 17.12.2009 |
| CN1842221A | 04.10.2006 | None | |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 200410103304